# EUROPEAN PATENT SPECIFICATION

(11) **EP 2 301 267 B1**
(45) Date of publication and mention of the grant of the patent: **06.03.2013**
(21) Application number: 08760705.7
(22) Date of filing: 09.06.2008
(51) Int. Cl.: H04W 4/10

(54) **PRIVATE COMMUNICATION IN A PUSH TO TALK OVER CELLULAR NETWORK**
PRIVATKOMMUNIKATION IN EINEM PUSH-TO-TALK-OVER-ZELLULARNETZ
COMMUNICATION PRIVÉE DANS UN RÉSEAU DE MESSAGERIE INSTANTANÉE VOCALE

(43) Date of publication of application: 30.03.2011
(73) Proprietor: Telefonaktiebolaget L M Ericsson (PUBL), 164 83 Stockholm (SE)
(72) Inventor: STILLE, Mats, Ola, S-167 65 Bromma (SE); HOLM, Jan, SE-803 10 Gävle (SE)
(74) Representative: Mitchell, Matthew Benedict David
(86) International application number: PCT/EP2008/057136
(87) International publication number: WO 2009/149739

(56) References cited:
- EP-A- 0 411 677
- WO-A-2006/052109
- US-A1- 2006 270 362
- US-A1- 2008 112 431
- OPEN MOBILE ALLIANCE: "OMA PoC Control Plane Approved Version 1.0.2 - 05 Sep 2007" OMA-TS-POC_CONTROLPLANE-V1_0_2-20070905-A, 5 September 2007 (2007-09-05), XP002517018

## Description

### TECHNICAL FIELD

The invention relates to the field of Push to Talk over Cellular networks, and in particular to private communication in a Push to Talk over Cellular network.

### BACKGROUND

Walkie-talkie type services have long proved popular amongst users who wish to communicate brief messages quickly between one another. Conventionally, such services have been provided by two-way portable radios which utilise a dedicated part of the radio spectrum, but which only allow users to communicate with a small group of pre-selected users who utilise similar terminals and who are within range of the relatively short operating range of the radios. More recently, services have been introduced into the United States that piggyback on the existing cellular telephone infrastructure. However, these services have been proprietary in nature and have not allowed users to communicate between different operator networks.

In an attempt to broaden the use of walkie-talkie type services, an industry grouping known as the Open Mobile Alliance (www.openmobilealliance.org) has been established with the aim of standardising suitable protocols, which will allow inter-network operability for Walkie-Talkie services offered over cellular networks. The service established by the various standards is known as Push to talk Over cellular (PoC). PoC proposes that associated speech data will be transported over a packet switched access network. In the case of GSM and UMTS, this will be the general packet radio service (GPRS) or 3G access networks. In other network architectures, analogous packet switched access networks will be utilised for transporting talk data. Push to Talk services may also be offered over circuit switched access networks, although this is not the preferred option.

The Push to talk over Cellular (PoC) system is typically implemented on GSM/GPRS/3G networks and makes use of the IP Multimedia Subsystem (IMS) standardised by the 3^{rd} Generation Partnership Project to facilitate the introduction of advanced data services into cellular networks, and in particular of real-time multimedia services. The IMS relies upon the Session Initiation Protocol (SIP), which has been defined by the Internet Engineering Task Force (IETF) for the setting up and control of multimedia IP-based sessions. A PoC Server is located within the IMS or is attached thereto, and implements the functionality for setting up and controlling PoC Sessions.

Existing push-to-talk (PTT) and conferencing systems typically use a control mechanism to grant one of the users the right to speak while other users in the communication are denied such right and are in listening mode. Such control mechanism is typically referred to as floor control, talker arbitration, talk burst control, etc. For example, the Open Mobile Alliance is currently working on a specification of Push-To-Talk over Cellular (PoC) system, which includes Media Burst Control Protocol (MBCP).

The PoC service is half-duplex, meaning that communication can go in either direction between two users, but only in one direction at a time. PoC services can be used for person-to-person calls as well as for group communication over cellular networks.

A PoC service runs in end-point clients and in Application Servers on top of an IMS network, or on top of another SIP based system containing the functionality of an IMS system. PoC Users use PoC Clients to access the PoC Service.

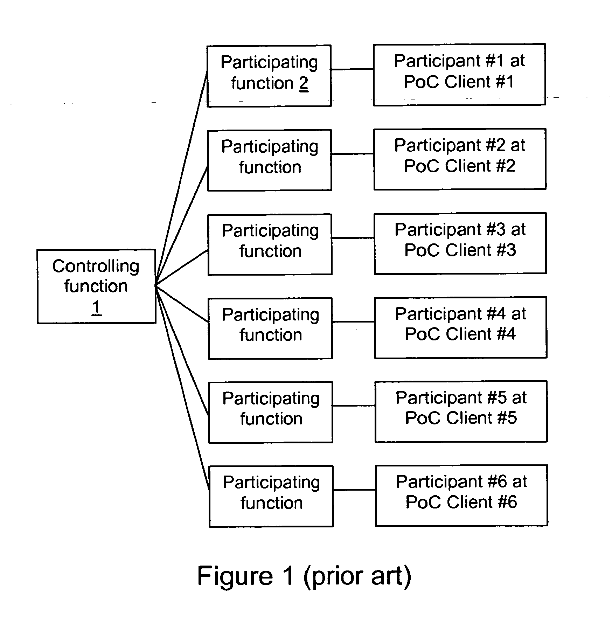

In order to communicate with another PoC user, a first user's PoC Client establishes a PoC Session. The PoC Session is routed through PoC Servers performing a Participating PoC Function or a Controlling PoC Function. Figure 1 shows a Controlling PoC function, which controls the PoC session between all participants, and a Participating function 2, which controls aspects of the session that are specific to individual participants. In the example of Figure 1, Participating function 2 controls the participation of participant #1 using PoC client #1. The Participating PoC Function 2 and the Controlling PoC Function 1 are both implemented in a PoC Server.

Only one Participant at a time is permitted to send PoC Media. The arbitration of the permission to send Media is controlled by the Controlling PoC Function 1 using the Media Burst Control Protocol (MBCP) developed by the Open Mobile Alliance PoC Working Group.

A number of communication methods are defined for PoC: 1-1 PoC Sessions, 1-many PoC Session and 1-many-1 PoC sessions. When using the 1-many communication method, any Media sent from one of the Participants is distributed to all other Participants that are capable of receiving this Media Type. When using the 1-many-1 communication method, any Media sent from one of the Participants is distributed to all other Participants that are capable of receiving this Media Type. When using the 1-many-1 communication method, one of the Participants is a PoC Dispatcher and the other Participants are PoC Fleet Members. Media sent by the PoC Dispatcher is distributed to all PoC Fleet Members that are capable of receiving that Media Type. However, Media sent from any of the PoC Fleet Members is sent only to the PoC Dispatcher. A typical use of the 1-many-1 communication method is for managing taxi drivers, where the PoC Dispatcher is a person at the taxi-company receiving calls from customers that want a taxi and where PoC Fleet Members are the individual taxi drivers.

It is possible for one or more of the Participants in a PoC Session to be anonymous. If a Participant is anonymous, the PoC Server performing the Controlling PoC Function assigns a temporary PoC Address to the anonymous user. The temporary PoC address is unique within the PoC Session, and in the format of a SIP URI e.g. sip:anonymous-1@anonymous.invalid. This temporary PoC Address is visible to all Participants in the PoC Session by way of Participant Information if the Participant subscribes to the "conference" event package defined in IETF RFC 4575 "A Session Initiation Protocol (SIP) Event Package for Conference State", J. Rosenberg, H. Schulzrinne, O. Levin, Ed. August 2006. http://www.ietf.org/rfc/rfc4575.txt, or in the MBCP Media Burst Taken message defined In the OMA User Plane specification "OMA PoC Control Plane", Version 1.0.2, Open Mobile Alliance, OMA-TS-PoC-ControlPlane-V1_0_2, http://www.openmobilealliance.org, and in the following version 2.0.

The Open Mobile Alliance PoC 2.0 Release introduced the possibility for Participants in an ongoing PoC Session to send short messages (referred to as "Discrete Media") using the SIP MESSAGE method.

A problem with this occurs in the case where a PoC Dispatcher in a 1-many-1 PoC Group Session wishes to send Discrete Media privately to one of the PoC Fleet Members. This is not possible, as the discrete media will be distributed to all of the fleet members. The same problem appears in a 1-many PoC Group Session. Discrete Media sent from one Participant will be distributed to all Participants in the PoC Group Session.

Consider the case where a customer calls a taxi company to inform the company that she has left a purse in taxi #16 thirty minutes ago. It would be beneficial for the PoC Dispatcher to contact driver of taxi #16 in a confidential way, for example by sending a text message to the driver of taxi #16, but without sending a PoC voice communication which would be played in the loudspeaker of taxi #16 that a new customer could also hear. In this, and similar situations, it would have be valuable for the Dispatcher to be able to send a text to the individual PoC Fleet Member rather than all of the PoC Fleet Members, since the message is of no interest to the other PoC Fleet Members.

Similarly, it would be valuable for a Participant in a 1-many PoC Group Session to be able to send an e-mail address to one of the Participants in the PoC Group Session without the other Participants receiving the e-mail address, but this is currently not possible, especially if the receiver of the e-mail address is anonymous in the ongoing PoC Session.

The OMA PoC 2.0 Release also defines a Full Duplex Call Follow-on Proceed service. The Full Duplex Call Follow-on Proceed service is based on the SIP MESSAGE method where a Participant in a PoC Session can send a TEL URI or a SIP URI to all Participants in an ongoing PoC Session. When the PoC Clients in the PoC Session receive the TEL URI or a SIP URI the PoC Client initiates a CS call or a VoIP call and disconnects from the PoC Session. However, if a Participant in a 1-many PoC Group Session wishes to establish a VoIP or CS full duplex call using the Full Duplex Call Follow-on Proceed service, the SIP MESSAGE request with the TEL URI or the SIP URI to be used when switching to a CS or VoIP call is sent to all Participants in the PoC Group Session with the result that all Participants will switch to the VoIP/CS call. For example, it is currently not possible for two Participants involved in a Chat PoC Group Session where all Participants are anonymous (which is very common when people participate in chat sessions on the internet) to establish a CS call and continue the conversation privately between themselves.

US 2006/0270362 describes a method for a PoC Server to handle PoC caller preferences, but this is concerned with initiating a PoC session rather than sending a private message to selected participants in an existing PoC Group Session.

### SUMMARY

The inventors have realised that there are circumstances in which it would be desirable to send information to only selected participants in a PoC Group Session, rather than to all Participants.

According to a first aspect of the invention, there is provided a method of sending a private communication to a Participant in a PoC Group Session. A PoC client sends a SIP REFER message to a PoC participating Server, which forwards it to a PoC Controlling Server. The SIP REFER message comprises an identity of a target Participant in the Group Session and a message content. The PoC Controlling Server creates a SIP MESSAGE method, the MESSAGE addressed to the target Participant and including the message content. The SIP MESSAGE is then sent to a target Participating Server that serves the target Participant. In this way, the PoC client can send private message content via the PoC Controlling Server to another Participant in a PoC Group Session without sending it to all Participants.

According to an optional embodiment, wherein the message content comprises a Discrete Media message. This allows a short message to be sent to an individual Participant in a PoC Group Session. As an option, where the target Participant is anonymous, the identity of the target Participant is retrieved from one of Participating Information and a Media Burst Control Protocol Media Burst message.

As a further option, the Refer-To header further comprises a request for a successful delivery report. In this case, the method optionally further comprises receiving at the Controlling Server a second SIP REFER message from the target Participating Server. The second REFER message has a Refer-To header that comprises an identity of a source Participant and a successful delivery report. The Controlling Server creates a second SIP MESSAGE method addressed to the original Participant, and also includes the successful delivery report. The second MESSAGE is then sent to the source Participating Server for forwarding to the original Participant.

Optionally, the Refer-To header includes an identity of a plurality of target Participants selected from all of the Participants in the Group Session. In this way, the message content can be sent to a group of users participating in a PoC Group Session without sending the message content to all of the Participants.

As an alternative option, the message content is a Full Duplex call Follow-on Proceed request. This allows the Participant to privately invite another Participant in a PoC Group Session to a a full duplex communication session with the source Participant. As an option, in the scenario in which the target Participant is anonymous, the identity of the target Participant is retrieved from either Participating Information or a Media Burst Control Protocol Media Burst message.

According to a second aspect of the invention, there is provided a PoC Controlling Server node. The node is provided with a receiver for receiving, from a source Participating Server serving a source Participant in the Group Session, a SIP REFER message. The REFER message includes a Refer-To header that comprises an identity of a target Participant in the Group Session and a message content. A processor is provided for creating a SIP MESSAGE method, the MESSAGE addressed to the target Participant and including the message content. A transmitter is provided for sending the MESSAGE to a target Participating Server, the target Participating Server serving the target Participant. The node allows a Participant in a PoC Group Session to send information to another Participant in the Session without having to send the information to all Participants.

The Refer-To header optionally includes a request for a successful delivery report. In this case, the Controlling Server node is optionally provided with a second receiver for receiving a second SIP REFER message from the target Participating Server, the second REFER message having a Refer-To header that comprises an identity of a source Participant and a successful delivery report. A second processor is provided for creating a second SIP MESSAGE method, the MESSAGE addressed to the source Participant and including the successful delivery report, and a second transmitter is provided for sending the second MESSAGE to the source Participating Server.

According to a third aspect of the invention, there is provided a PoC Client node, which is provided with a processor for generating a SIP REFER message. The REFER message includes a Refer-To header including an identity of a target Participant in a Group Session and a message content. A transmitter is also provided for sending the REFER message to a PoC Controlling Server via a PoC Participating Server. Th PoC Client node allows a PoC user to send message content to another PoC User in a Group Session without having to send the message content to all PoC Users.

As an option, the message content comprises a Discrete Media message. As a further option, the Client node is provided with a second processor for determining the identity of the target Participant from either a Participating Information or a Media Burst Control Protocol Media Burst message. The Client node is optionally provided with a receiver arranged to receive a SIP confirmation MESSAGE that includes a successful delivery report.

As an alternative option, the message content includes a Full Duplex call Follow-on Proceed request, the request inviting the target Participant to a full duplex communication session with the source Participant, without inviting all other Participants in the Group Session.

According to a fourth aspect of the invention, there is provided a PoC Participating Server node that includes a receiver for receiving from a PoC client node a SIP REFER message. The REFER message includes a Refer-To header that comprises an identity of a target Participant in a Group Session and a message content. The PoC Participating Server node is also provided with a transmitter for sending to received Refer message to a PoC Controlling Server node.

### BRIEF DESCRIPTION OF THE DRAWINGS

Figure 1 illustrates schematically in a block diagram a PoC Group Session functional structure;
Figure 2 is a signalling diagram illustrating signalling required for sending Discrete Media for private messaging in a 1-many or a 1-many-1 PoC session according to an embodiment of the invention;
Figure 3 is a flow diagram showing steps taken by a PoC controlling server according to an embodiment of the invention;
Figure 4 illustrates schematically in a block diagram a PoC Server (controlling) node according to an embodiment of the invention;
Figure 5 illustrates schematically in a block diagram a PoC client node according to an embodiment of the invention; and
Figure 6 illustrates schematically in a block diagram a PoC Server (participating) node according to an embodiment of the invention.

### DETAILED DESCRIPTION

A SIP MESSAGE method can be used to provide private communications in a 1-many or 1-many-1 PoC session that can be used for sending a short Discrete Media message or for privately initiating a Full Duplex Call Follow-on Proceed service between two PoC clients in a 1-many or a 1-many-1 PoC session.

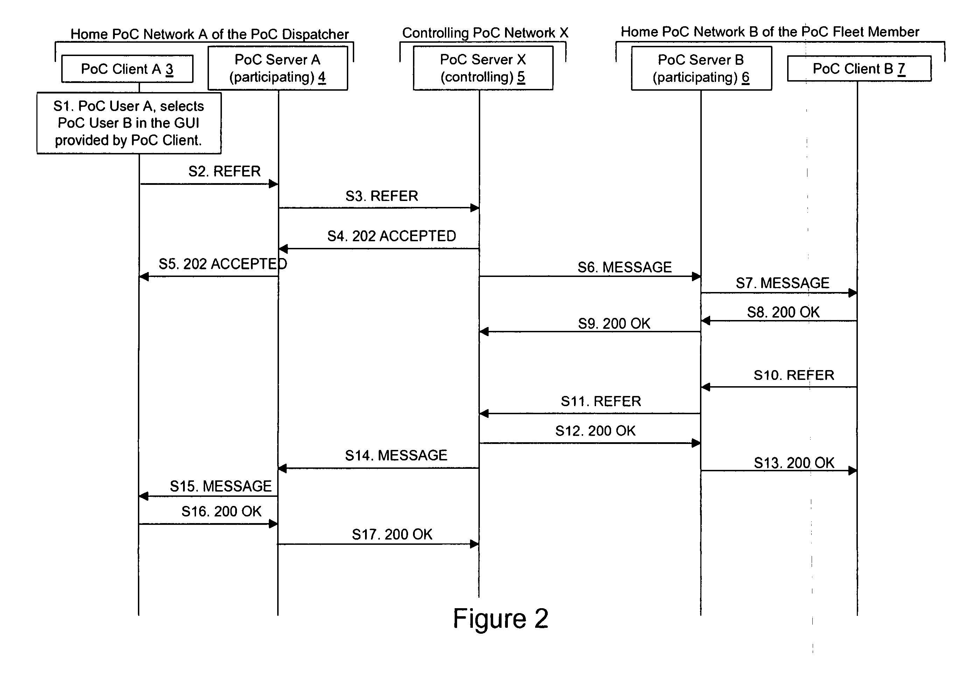

Considering the case of privately sending Discrete Media between two PoC clients in a 1-many or a 1-many-1 PoC communication session, and with reference to Figure 2, PoC User A wishes to send a private message to PoC User B. The following numbering corresponds to the numbering shown in Figure 2:
S1. PoC User A selects the Participant (in this case, PoC User B) using a Graphical User Interface (GUI) provided by PoC Client A 3. The Identity of PoC User B is retrieved from Participating Information (see "OMA PoC Control Plane", Version 2.0, Open Mobile Alliance, OMA-TS-PoC-ControlPlane-V2_0, http://www.openmobilealliance.org), or a MBCP Media Burst message (see IETF RFC 4575 "A Session Initiation Protocol (SIP) Event Package for Conference State", J. Rosenberg, H. Schulzrinne, O. Levin, Ed. August 2006. http://www.ietf.org/rfc/rfc4575.txt). Where Participating Information is received, PoC User A receives information about all participants in the Group session. Such infromation includes media types supported by the participants, Full Duplex Follow-on Proceed support, and also a nickname and identity of each participant. Where PoC User B has requested privacy, PoC Server X (controlling) 5 replaced PoC User B's real identity with an anonymous identity unique to the session, e.g. anonymous-1 @anonymous.invalid.
S2. PoC Client A 3 sends a SIP REFER request to the PoC Server A (participating) 4. The SIP REFER request includes in the Refer-To header:
   a. SIP MESSAGE method;
   b. The identity of PoC User B;
   c. The Discrete Media content (e.g. plain/text); and,
   d. A request for success delivery report if a success delivery report is needed.
S3. PoC Server A (participating) 4 forwards the SIP REFER request to PoC Server X (controlling) 5.
S4. PoC Server X (controlling) 5 checks if the Participant (PoC User B) identified by in the Refer-To header of the SIP REFER request supports reception of a SIP MESSAGE request. If the Participant does support reception of a SIP MESSAGE request, then PoC Server X (controlling) 5 sends a SIP 202 "Accepted" response towards PoC Server A (participating) 4. If the Participant identity in the Refer-To header of the SIP REFER request is an anonymous identity, PoC Server X (controlling) 5 will have retrieved the real identity from information cached when the Participant initiated, joined, rejoined or was invited to the PoC Session.
S5. PoC Server A (participating) 4 forwards the SIP 202 "Accepted" response to PoC Client A 3.
S6. PoC Server X (controlling) 5 sends a SIP MESSAGE request to PoC Server B (participating) 6. Note that PoC Server B 6 serves PoC Client B 7, which is PoC User B's PoC Client. The SIP MESSAGE request is sent according to known OMA PoC procedures. This may include sending the SIP MESSAGE request inside an existing SIP dialog between PoC Server X (controlling) 5 and PoC Server B (participating) 6, or outside the SIP dialog. In the scenario where the SIP MESSAGE request is sent outside the SIP dialog, the SIP MESSAGE request includes the identity of the Participant using PoC Client B 7. Whether the SIP MESSAGE request is sent inside or outside an existing SIP dialog, the SIP MESSAGE request contains
   a. The content (e.g. plain/text) included in the Refer-To header of the received SIP REFER request;
   b. A request for success delivery report if a success delivery report is received in the Refer-To header of the SIP REFER request.
S7. PoC Server B (participating) 6 forwards the SIP MESSAGE request to PoC Client B 7. As the SIP MESSAGE contains the Discrete Media, PoC Client B 7 can display the Discrete Media to PoC User B without having to display the Discrete Media to all Participants in the session.
S8. PoC Client B 7 sends a SIP 200 "OK" response to PoC Server B (participating) 6 to confirm that the SIP MESSAGE request of step S7 was received.
S9. PoC Server B (participating) 6 forwards the SIP 200 "OK" response to PoC Server X (controlling) 5.
   If PoC Client A 3 previously requested a success delivery report in step S2, then the following steps are applied:
S10. PoC Client B 7 sends a SIP REFER request to PoC Server B (participating) 6. The SIP REFER request includes in the Refer-To header:
   a. SIP MESSAGE method;
   b. The identity of the PoC Fleet Member (PoC User A) received in the Refer-By header of the SIP MESSAGE request. The identity may be an anonymous identity or a real identity; and,
   c. The success delivery report.
S11. PoC Server B (participating) 6 forwards the SIP REFER request to PoC Server X (controlling) 5.
S12. PoC Server X (controlling) 5 checks if the Participant (PoC User A) identified in the Refer-To header of the SIP REFER request supports reception of the SIP MESSAGE request and, if that is the case, PoC Server X (controlling) 5 sends a SIP 202 "Accepted" response towards PoC Server B (participating) 6. If the identity in the Refer-To header of the SIP REFER request is an anonymous identity, PoC Server X (controlling) 5 will have retrieved the real identity of PoC User A from information cached when the Participant initiated, joined, rejoined or was invited to the PoC Session.
S13. PoC Server B (participating) 6 forwards the SIP 202 "Accepted" response to PoC Client B 7.
S14. PoC Server X (controlling) 5 sends the SIP MESSAGE request to PoC Server A (participating) 4. The SIP MESSAGE request can be sent according to OMA-specified PoC procedures. This may include sending the SIP MESSAGE request inside an existing SIP dialog between PoC Server X (controlling) 5 and the PoC Server A (participating) 4, or outside the SIP dialog. In the scenario of the SIP MESSAGE request being sent outside the SIP dialog, the SIP MESSAGE request includes the identity of the Participant at PoC Client A 3. Regardless of whether the SIP MESSAGE request is sent inside or outside the existing SIP dialog, it contains the success delivery report included in the Refer-To header of the received SIP REFER request.
S15. PoC Server A (participating) 4 forwards the SIP MESSAGE request to PoC Client A 3.
S16. PoC Client A 3 sends a SIP 200 "OK" response to PoC Server A (participating) 4 to confirm that the SIP MESSAGE request was received.
S17. PoC Server A (participating) 4 forwards the SIP 200 "OK" response to PoC Server X (controlling) 5.

Note that Figure 2 only shows PoC functional entities. In reality, messages are sent via a SIP/IP Core such as a 3GPP/3GPP2 IMS network. Also note that steps S2 to S5 and S10 to S13 are not described in the OMA PoC specifications while steps S6 to S9 and S14 to S17 are. In the OMA PoC specifications, steps S6 to S9 are repeated for each Participant that supports Discrete Media in SIP MESSAGE method, while above described invention makes it possible to send Discrete Media in the SIP MESSAGE to only one Participant.

Note also that whilst the above describes a way for PoC User A to send Discrete Media to PoC User B, there may be situations in which PoC User A wants to send Discrete Media to certain Participants in a PoC Group Session, but not all Participants. For example, PoC User A may wish to send Discrete Media to PoC Users B, C and D, but not to PoC Users E, F and G, where all of the users are Participants in the same PoC Group Session. In this case, PoC User A selects the Users that the Discrete Media message is to be sent to, and the Refer-To header of the SIP REFER request includes a Content-ID field. This field refers to one of the message bodies of the REFER request, which includes identities for all of the selected Participants. In this way, Discrete Media can be addressed by PoC Server X (controlling) 5 to only the selected Users. Furthermore, a selected group of Users can be chosen automatically or based on certain criteria. For example, a group of Users who are on a particular charging tariff can be selected for receiving Discrete Media messaging relating to their charging without the Discrete Media being sent to all Participants in the Group Session. Similarly, Discrete Media messages can be sent to selected Participants depending on which network operator they are registered with. It will be appreciated that there are many other circumstances in which a group of Users can be sent Discrete Media messages without sending the Discrete Media messages to all Participants in a PoC session.

Turning now to the case where a PoC User A wishes to establish a VoIP session with PoC User B, where both Users are Participants in a 1-many PoC Group session, a Full Duplex Call Follow-One Proceed message must be sent from PoC Client A to PoC client B, but not sent to all other Participants in the PoC group session. The signalling is substantially the same as that shown in Figure 2, but with the following differences:
● the Content-Type of the message body in the Refer-To header sent in step S2 is always application/vnd.poc.fdcfo+xml body;
● The PoC Server X (controlling) 5, after receiving the SIP REFER of step S3, checks if the Participant identified by the PoC Address received in the Refer-To header supports Full Duplex Call Follow-on Proceed before continuing the next steps; and,
● Steps S10 to S17 are not performed since the Full Duplex Call Follow-on Proceed procedures in OMA PoC do not define any procedure to report successful delivery of the Full Duplex Call Follow-on Proceed message.

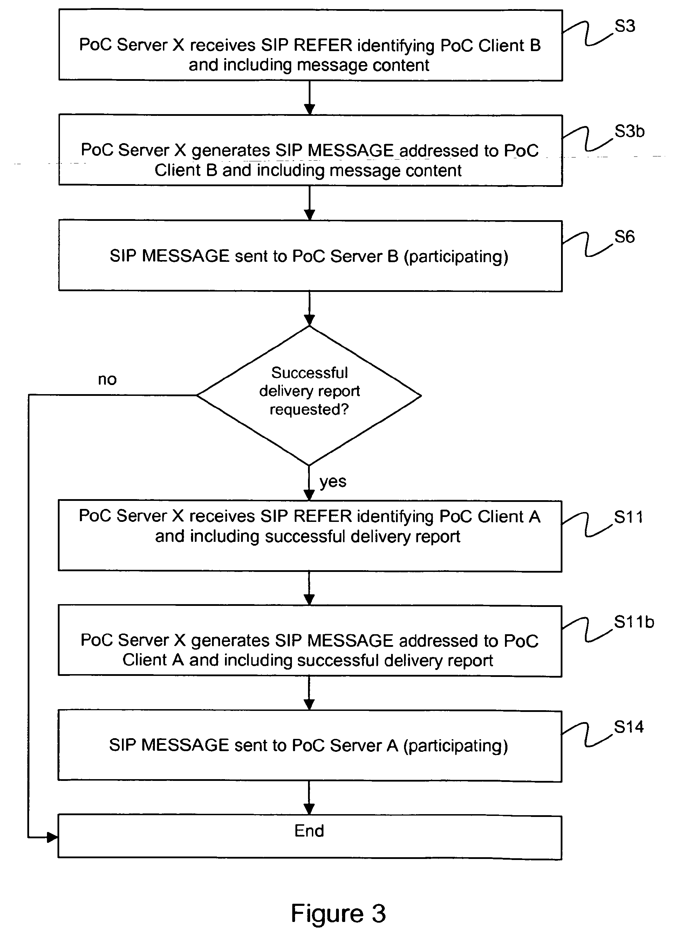

To further illustrate the invention, the steps taken by PoC Server X 5 are shown in Figure 3. The following numbering corresponds to the numbering of Figures 2 and 3.

S3. PoC Server X (controlling) 5 receives a SIP REFER from PoC Server A (participating) 4. The SIP REFER includes an identity of PoC Client B and a message content that may be a Discrete Media message or a Full Duplex call Follow-on Proceed request. If the message content is a Discrete Media message, the SIP REFER may also include a request for a successful delivery report.

S3b. PoC Server X (controlling) 5 generates a SIP MESSAGE method addressed to the PoC Client B and including the message content; and

S6. PoC Server X (controlling) 5 sends the SIP MESSAGE to PoC Server B (participating) 6.

If a request for a successful delivery report was included in the SIP REFER message, then the following steps also occur at PoC Server X (controlling) 5:
S11. PoC Server X (controlling) 5 receives a SIP REFER message from PoC Server B, the message having a Refer-To header that comprises an identity of a source Participant and a successful delivery report;
S11 b. PoC Server X (controlling) 5 generates a SIP MESSAGE method, the MESSAGE addressed to the PoC Client A and including the successful delivery report; and
S14. PoC Server X (controlling) 5 sends a second MESSAGE to the source Participating Server.

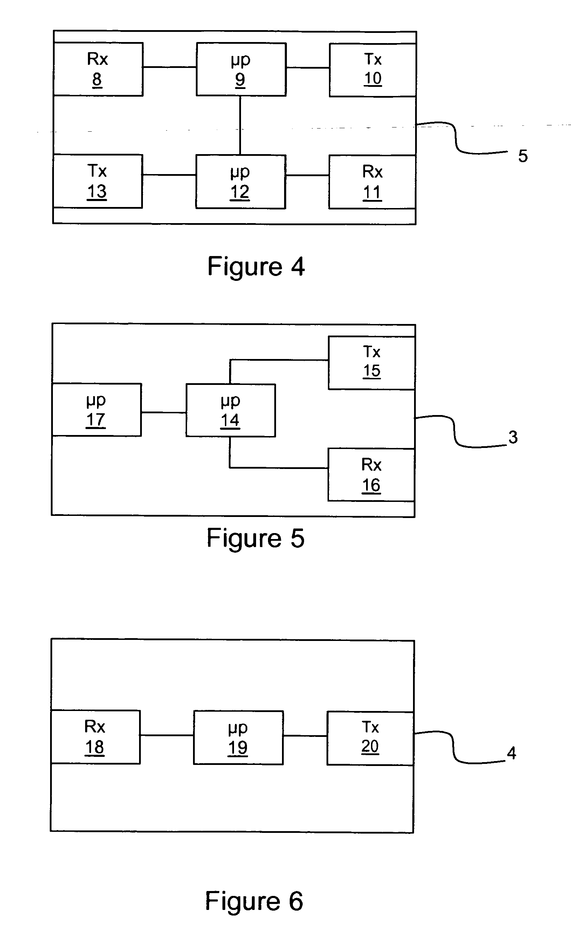

An example of PoC Server X (controlling) 5 is illustrated in Figure 4. The Server comprises a receiver 8 for receiving the REFER message sent from PoC Server A (participating) 4, and a processor 9 for creating the SIP MESSAGE method. A transmitter 10 is provided for sending the MESSAGE to a PoC Server B (participating) 6. In the case where the Refer-To header in the SIP REFER message includes a request for a successful delivery report, then the PoC Server X (controlling) 5 is further provided with a second receiver 11 for receiving a Session Initiation Protocol REFER message from PoC Server B (participating) 6, and a second processor 12 for creating a SIP MESSAGE method addressed to the PoC Client A 3 including the successful delivery report. A second transmitter 13 is provided for sending the second MESSAGE to PoC Server A (participating) 4 the source Participating Server.

An example of a PoC client 3 is illustrated in Figure 5. The PoC Client 3 is provided with a processor 14 for generating a SIP REFER message. The REFER message has a Refer-To header that comprises an identity of a PoC Client B 7 in the PoC Group Session, and a message content that may be a Discrete Media message or a Full Duplex call Follow-on Proceed request. A transmitter 15 is provided for sending the REFER message to a PoC Server A (participating) 4. The client 3 may further include a receiver 16 arranged to receive a SIP MESSAGE that includes a successful delivery report, if a successful delivery report was requested. The node may also comprise a second processor 17 for determining the identity of the PoC User B if PoC user B is anonymous, from one of Participating Information and a Media Burst Control Protocol Media Burst message.

An example of a PoC Server A (participating) 4 is illustrated in Figure 6. The PoC Server (participating) 4 is provided with a receiver 18 for receiving the SIP REFER message from PoC Client A 3, a processor 19 for message handling, and a transmitter 20 for forwarding the SIP REFER message to the PoC Sever X (controlling) 5.

The invention makes it possible to send private communications to individual Participants in a 1-many or 1-many-1 PoC Group session. So, for example, Discrete Media can be sent from a Dispatcher to an individual PoC Fleet Member in a 1-many-1 communication. Furthermore, Discrete Media can be sent from one Participant to another Participant in a 1-many PoC Group session even if Participants in the PoC Group session are anonymous. A successful delivery report can be sent from a receiver of Discrete Media to an individual Participant in a PoC Session even if Participants in the PoC Group Session are anonymous. The invention can also be used to establish a VoIP/CS call using the Full Duplex Call Follow-on Proceed service between two Participants in a PoC Group Session by way of the invention.

It will be appreciated by the person of skill in the art that various modifications may be made to the above-described embodiments without departing from the scope of the present invention. For example, the PoC functional entities are described as being in an IMS network, but it is envisaged that other types of network can be used to carry PoC sessions.

The following abbreviations have been used in this description:
- 3GPP: 3G Partnership Project
- 3GPP2: 3rd Generation Partnership Project 2
- CDMA2000: cdma2000 spread spectrum
- IETF: International Engineering Task Force
- MBCP: Media Burst Control Protocol
- OMA: Open Mobile Alliance
- PoC: Push to Talk over Cellular
- SIP: Session Initiation Protocol
- WCDMA: Wide band Code Division Multiple Access
- WG: Working Group

## Claims

1. A method of sending a private communication to a Participant in a Push to Talk over Cellular Group Session, the method **characterized by**:
at a Controlling Server receiving (S3), from a source Participating Server serving a source Participant in the Group Session, a Session Initiation Protocol REFER message, the REFER message having a Refer-To header that comprises an identity of a target Participant in the Group Session and a message content;
creating (S3b) a Session Initiation Protocol MESSAGE method, the MESSAGE addressed to the target Participant and including the message content; and
sending (S6) the MESSAGE to a target Participating Server, the target Participating Server serving the target Participant.

2. The method according to claim 1, wherein the message content comprises a Discrete Media message.

3. The method according to claim 1 or 2, wherein the target Participant is anonymous, and the identity of the target Participant is retrieved from one of Participating Information and a Media Burst Control Protocol Media Burst message.

4. The method according to claim 1, 2 or 3, wherein the Refer-To header further comprises a request for a successful delivery report.

5. The method according to claim 4, further comprising:
at the Controlling Server, receiving (S11) a second Session Initiation Protocol REFER message from the target Participating Server, the second REFER message having a Refer-To header that comprises an identity of a source Participant and a successful delivery report;
creating (S11b) a second Session Initiation Protocol MESSAGE method, the MESSAGE addressed to the source Participant and including the successful delivery report; and
sending (S14) the second MESSAGE to the source Participating Server.

6. The method according to any one of claims 1 to 5, wherein the Refer-To header comprises an identity of a plurality of target Participants selected from all of the Participants in the Group Session.

7. The method according to claim 1, wherein the message content comprises a Full Duplex call Follow-on Proceed request, the request inviting the target Participant to a full duplex communication session with the source Participant.

8. The method according to claim 7, wherein the target Participant is anonymous, and the identity of the target Participant is retrieved from one of Participating Information and a Media Burst Control Protocol Media Burst message.

9. A Push to Talk over Cellular Controlling Server node (5) **characterized by**:
a receiver (8) for receiving, from a source Participating Server serving a source Participant in a Group Session, a Session Initiation Protocol REFER message, the REFER message having a Refer-To header that comprises an identity of a target Participant in the Group Session and a message content;
a processor (9) for creating a Session Initiation Protocol MESSAGE method, the MESSAGE addressed to the target Participant and including the message content; and
a transmitter (10) for sending the MESSAGE to a target Participating Server, the target Participating Server serving the target Participant.

10. The Controlling Server node according to claim 9, wherein the Refer-To header further comprises a request for a successful delivery report.

11. The Controlling Server node according to claim 10, further comprising:
a second receiver (11) for receiving a second Session Initiation Protocol REFER message from the target Participating Server, the second REFER message having a Refer-To header that comprises an identity of a source Participant and a successful delivery report;
a second processor (12) for creating a second Session Initiation Protocol MESSAGE method, the MESSAGE addressed to the source Participant and including the successful delivery report; and
a second transmitter (13) for sending the second MESSAGE to the source Participating Server.

12. A Push to Talk over Cellular Client node (3), the Client node **characterized by**:
a processor (14) for generating a Session Initiation Protocol REFER message, the REFER message having a Refer-To header that comprises an identity of a target Participant in a Group Session and a message content;
a transmitter (15) for sending the REFER message to a Push to Talk over Cellular Controlling Server via a Push to Talk over Cellular Participating Server.

13. The Client node according to claim 12, comprising a second processor (17) for determining the identity of the target Participant from one of Participating Information and a Media Burst Control Protocol Media Burst message, the Client node optionally further comprising a receiver (16) arranged to receive a Session Initiation Protocol confirmation MESSAGE that includes a successful delivery report.

14. The Client node according to claim 12, wherein the message content comprises a Full Duplex call Follow-on Proceed request, the request inviting the target Participant to a full duplex communication session with the source Participant.

15. A Push to Talk over Cellular Participating Server node (4) **characterized by**:
a receiver (18) for receiving from a Push to Talk over Cellular client node a Session Initiation Protocol REFER message, the REFER message having a Refer-To header that comprises an identity of a target Participant in a Group Session and a message content; and
a transmitter (19) for sending the received REFER message to a Push to Talk over Cellular Controlling Server node.

## Patentansprüche

1. Verfahren zum Senden einer privaten Kommunikation an einen Teilnehmer an einer Push-to-Talk-over-Cellular-Gruppensitzung, wobei das Verfahren **gekennzeichnet ist durch**:
in einem Steuerungsserver erfolgendes Empfangen (S3) einer Sitzungseinleitungsprotokoll-Verweisnachricht von einem Quell-Teilnahmeserver, der einen Quell-Teilnehmer an der Gruppensitzung versorgt, wobei die Verweisnachricht einen Verweise-auf-Header hat, der eine Identität eines Ziel-Teilnehmers an der Gruppensitzung und einen Nachrichteninhalt umfasst;
Erzeugen (S3b) einer Sitzungseinleitungsprotokoll-Nachrichtmethode, wobei die Nachricht an den Ziel-Teilnehmer adressiert ist und den Nachrichteninhalt einschließt; und
Senden (S6) der Nachricht an einen Ziel-Teilnahmeserver, wobei der Ziel-Teilnahmeserver den Ziel-Teilnehmer versorgt.

2. Verfahren nach Anspruch 1, worin der Nachrichteninhalt eine Diskrete-Medien-Nachricht umfasst.

3. Verfahren nach Anspruch 1 oder 2, worin der Ziel-Teilnehmer anonym ist und die Identität des Ziel-Teilnehmers aus einem von Folgendem abgefragt wird, nämlich **Teilnahmeinformation und eine Medienburstnachricht des** Medienburststeuerungsprotokolls.

4. Verfahren nach Anspruch 1, 2 oder 3, worin der Verweise-auf-Header ferner eine Aufforderung zu einem Bericht über erfolgreiche Zustellung umfasst.

5. Verfahren nach Anspruch 4, ferner umfassend:
im Steuerungsserver erfolgendes Empfangen (S11) einer zweiten Sitzungseinleitungsprotokoll-Verweisnachricht vom Quell-Zielserver, wobei die zweite Verweisnachricht einen Verweise-auf-Header hat, der eine Identität eines Quell-Teilnehmers und einen Bericht über erfolgreiche Zustellung umfasst;
Erzeugen (S11b) einer zweiten Sitzungseinleitungsprotokoll-Nachrichtmethode, wobei die Nachricht an den Quell-Teilnehmer adressiert ist und den Bericht über erfolgreiche Zustellung einschließt; und
Senden (S14) der zweiten Nachricht an den Quell-Teilnahmeserver.

6. Verfahren nach einem der Ansprüche 1 bis 5, worin der Verweise-auf-Header eine Identität einer Vielzahl von Ziel-Teilnehmern, die aus allen Teilnehmern an der Gruppensitzung ausgewählt wurde, umfasst.

7. Verfahren nach Anspruch 1, worin der Nachrichteninhalt eine Vollduplexruf-Sofortfortsetzungsaufforderung umfasst, wobei die Aufforderung den Ziel-Teilnehmer zu einer Vollduplex-Kommunikationssitzung mit dem Quell-Teilnehmer einlädt.

8. Verfahren nach Anspruch 7, worin der Ziel-Teilnehmer anonym ist und die Identität des Ziel-Teilnehmers aus einem von Folgendem abgefragt wird, nämlich **Teilnahmeinformation und eine** Medienburstnachricht des Medienburststeuerungsprotokolls.

9. Push-to-Talk-over-Cellular-Steuerungsserverknoten (5), **gekennzeichnet durch**:
einen Empfänger (8) zum Empfangen einer Sitzungseinleitungsprotokoll-Verweisnachricht von einem Quell-Teilnahmeserver, der einen Quell-Teilnehmer an einer Gruppensitzung versorgt, wobei die Verweisnachricht einen Verweise-auf-Header hat, der eine Identität eines Ziel-Teilnehmers an der Gruppensitzung und einen Nachrichteninhalt umfasst;
einen Prozessor (9) zum Erzeugen einer Sitzungseinleitungsprotokoll-Nachrichtmethode, wobei die Nachricht an den Ziel-Teilnehmer adressiert ist und den Nachrichteninhalt einschließt; und
einen Sender (10) zum Senden der Nachricht an einen Ziel-Teilnahmeserver, wobei der Ziel-Teilnahmeserver den Ziel-Teilnehmer versorgt.

10. Steuerungsserverknoten nach Anspruch 9, worin der Verweise-auf-Header ferner eine Aufforderung zu einem Bericht über erfolgreiche Zustellung umfasst.

11. Steuerungsserverknoten nach Anspruch 10, ferner umfassend:
einen **zweiten Empfänger (11) zum Empfangen einer zweiten** Sitzungseinleitungsprotokoll-Verweisnachricht vom Quell-Zielserver, wobei die zweite Verweisnachricht einen Verweise-auf-Header hat, der eine Identität eines Quell-Teilnehmers und einen Bericht über erfolgreiche Zustellung umfasst;
**einen zweiten Prozessor (12) zum Erzeugen einer zweiten** Sitzungseinleitungsprotokoll-Nachrichtmethode, wobei die Nachricht an den Quell-Teilnehmer adressiert ist und den Bericht über erfolgreiche Zustellung einschließt; und
einen zweiten Sender (13) zum Senden der zweiten Nachricht an den Quell-Teilnahmeserver.

12. Push-to-Talk-over-Cellular-Clientknoten (3), wobei der Clientknoten **gekennzeichnet ist durch**:
einen Prozessor (14) zum Erzeugen einer Sitzungseinleitungsprotokoll-Verweisnachricht, wobei die Verweisnachricht einen Verweise-auf Header hat, der eine Identität eines Ziel-Teilnehmers an der Gruppensitzung und einen Nachrichteninhalt umfasst;
einen Sender (15) zum Senden der Verweisnachricht an einen Push-to-Talk-over-Cellular-Steuerungsserverknoten über einen Push-to-Talk-over-Cellular-Teilnahmeserver.

13. Clientknoten nach Anspruch 12, umfassend einen zweiten Prozessor (17) zum Bestimmen der Identität des Ziel-Teilnehmers aus einem von Folgendem, nämlich **Teilnahmeinformation und eine Medienburstnachricht des** Medienburststeuerungsprotokolls, wobei der Clientknoten optional ferner einen Empfänger (16) umfasst, der dafür eingerichtet ist, eine Sitzungseinleitungsprotokoll-Bestätigungsnachricht zu empfangen, die einen Bericht über erfolgreiche Zustellung umfasst.

14. Clientknoten nach Anspruch 12, worin der Nachrichteninhalt eine Vollduplexruf-Sofortfortsetzungsaufforderung umfasst, wobei die Aufforderung den Ziel-Teilnehmer zu einer Vollduplex-Kommunikationssitzung mit dem Quell-Teilnehmer einlädt.

15. Push-to-Talk-over-Cellular-Teilnahmeserverknoten (4), **gekennzeichnet durch**:
einen Empfänger (18) zum Empfangen einer Sitzungseinleitungsprotokoll-Verweisnachricht von einem Push-to-Talk-over-Cellular-Clientknoten, wobei die Verweisnachricht einen Verweise-auf-Header hat, der eine Identität eines Ziel-Teilnehmers an einer Gruppensitzung und einen Nachrichteninhalt umfasst; und
einen Sender (19) zum Senden der empfangenen Verweisnachricht an einen Push-to-Talk-over-Cellular-Steuerungsserverknoten.

## Revendications

1. Procédé d'envoi d'une communication privée pour un participant à une session de groupe de messagerie instantanée vocale, le procédé étant **caractérisé par** :
au niveau d'un serveur de commande, la réception (S3), à partir d'un serveur participant source desservant un participant source dans la session de groupe, un message de renvoi « REFER » de protocole d'ouverture de session, le message de renvoi « REFER » présentant un entête de renvoi « Refer-To » qui comprend une identité d'un participant cible dans la session de groupe et un contenu de message ;
la création (S3b) d'un procédé « MESSAGE » de protocole d'ouverture de session, le procédé « MESSAGE » étant adressé au participant cible et incluant le contenu de message ; et
l'envoi (S6) du procédé « MESSAGE » à un serveur participant cible, le serveur participant cible desservant le participant cible.

2. Procédé selon la revendication 1, dans lequel le contenu de message comprend un message multimédia discret « Discrete Media ».

3. Procédé selon la revendication 1 ou 2, dans lequel le participant cible est anonyme, et l'identité du participant cible est extraite de l'un des éléments parmi des informations de participation et un message de salve multimédia de protocole de commande de salves multimédias « Media Burst Control Procol Media Burst ».

4. Procédé selon la revendication 1, 2 ou 3, dans lequel l'entête de renvoi « Refer-To » comprend en outre une demande de rapport de distribution réussie.

5. Procédé selon la revendication 4, comprenant en outre :
au niveau du serveur de commande, la réception (S11) d'un second message de renvoi « REFER » de protocole d'ouverture de session, en provenance du serveur participant cible, le second message de renvoi « REFER » présentant un entête de renvoi « Refer-To » qui comprend une identité d'un participant source et un rapport de distribution réussie ;
la création (S11b) d'un second procédé « MESSAGE » de protocole d'ouverture de session, le procédé « MESSAGE » étant adressé au participant source et incluant le rapport de distribution réussie ; et
l'envoi (S14) du second procédé « MESSAGE » au serveur participant source.

6. Procédé selon l'une quelconque des revendications 1 à 5, dans lequel l'entête de renvoi « Refer-To » comprend une identité d'une pluralité de participants cible sélectionnés parmi l'ensemble des participants à la session de groupe.

7. Procédé selon la revendication 1, dans lequel le contenu de message comprend une demande de mise en oeuvre de suivi d'appel en duplex intégral « Full Duplex call Follow-on Proceed », la demande invitant le participant cible à une session de communication en duplex intégral avec le participant source.

8. Procédé selon la revendication 7, dans lequel le participant cible est anonyme, et l'identité du participant cible est extraite de l'un des éléments parmi des informations de participation et un message de salve multimédia de protocole de commande de salves multimédias « Media Burst Control Procol Media Burst ».

9. Noeud de serveur de commande de messagerie instantanée vocale (5), **caractérisé par** :
un récepteur (8) pour recevoir, à partir d'un serveur participant source desservant un participant source dans une session de groupe, un message de renvoi « REFER » de protocole d'ouverture de session, le message de renvoi « REFER » présentant un entête de renvoi « Refer-To » qui comprend une identité d'un participant cible dans la session de groupe et un contenu de message ;
un processeur (9) pour créer un procédé « MESSAGE » de protocole d'ouverture de session, le procédé « MESSAGE » étant adressé au participant cible et incluant le contenu de message ; et
un émetteur (10) pour envoyer le procédé « MESSAGE » à un serveur participant cible, le serveur participant cible desservant le participant cible.

10. Noeud de serveur de commande selon la revendication 9, dans lequel l'entête de renvoi « Refer-To » comprend en outre une demande de rapport de distribution réussie.

11. Noeud de serveur de commande selon la revendication 10, comprenant en outre :
un second récepteur (11) destiné à recevoir un second message de renvoi « REFER » de protocole d'ouverture de session en provenance du serveur participant cible, le second message de renvoi « REFER » présentant un entête de renvoi « Refer-To » qui comprend une identité d'un participant source et un rapport de distribution réussie ;
un second processeur (12) pour créer un second procédé « MESSAGE » de protocole d'ouverture de session, le procédé « MESSAGE » étant adressé au participant source et incluant le rapport de distribution réussie ; et
un second émetteur (13) pour envoyer le second procédé « MESSAGE » au serveur participant source.

12. Noeud client de messagerie instantanée vocale (3), le noeud client étant **caractérisé par** :
un processeur (14) destiné à générer un message de renvoi « REFER » de protocole d'ouverture de session, le message de renvoi « REFER » présentant un entête de renvoi « Refer-To » qui comprend une identité d'un participant cible dans une session de groupe et un contenu de message ;
un émetteur (15) pour envoyer le message de renvoi « REFER » à un serveur de commande de messagerie instantanée vocale par l'intermédiaire d'un serveur participant de messagerie instantanée vocale.

13. Noeud client selon la revendication 12, comprenant un second processeur (17) destiné à déterminer l'identité du participant cible à partir de l'un des éléments parmi des informations de participation et un message de salve multimédia de protocole de commande de salves multimédias « Media Burst Control Procol Media Burst », le noeud client comprenant en outre facultativement un récepteur (16) agencé de manière à recevoir un MESSAGE de confirmation de protocole d'ouverture de session qui comprend un rapport de distribution réussie.

14. Noeud client selon la revendication 12, dans lequel le contenu de message comprend une demande de mise en oeuvre de suivi d'appel en duplex intégral « Full Duplex call Follow-on Proceed », la demande invitant le participant cible à une session de communication en duplex intégral avec le participant source.

15. Noeud de serveur participant de messagerie instantanée vocale (4), **caractérisé par** :
un récepteur (18) destiné à recevoir, à partir d'un noeud client de messagerie instantanée vocale, un message de renvoi « REFER » de protocole d'ouverture de session, le message de renvoi « REFER » présentant un entête de renvoi « Refer-To » qui comprend une identité d'un participant cible dans une session de groupe et un contenu de message ; et
un émetteur (19) pour envoyer le message de renvoi « REFER » reçu à un noeud de serveur de commande de messagerie instantanée vocale.
